# FASCICULE DE BREVET EUROPEEN

(11) **EP 3 047 227 B1**
(45) Date de publication et mention de la délivrance du brevet: **14.02.2018**
(21) Numéro de dépôt: 14784265.2
(22) Date de dépôt: 11.09.2014
(51) Int. Cl.: F41B 7/04

(54) **ARBALÈTE DE CHASSE SOUS-MARINE**
ARMBRUST FÜR DIE UNTERWASSERJAGD
UNDERWATER HUNTING CROSSBOW

(30) Priorité: 18.09.2013 FR 1302163
(43) Date de publication de la demande: 27.07.2016
(73) Titulaire: Miceli Design, 13360 Roquevaire (FR)
(72) Inventeur: MICELI, Olivier, 13360 Roquevaire (FR)
(74) Mandataire: Awapatent AB
(86) Numéro de dépôt international: PCT/FR2014/000205
(87) Numéro de publication internationale: WO 2015/040286

(56) Documents cités:
- FR-A- 1 185 179
- FR-A1- 2 267 535
- FR-A1- 2 778 529
- SU-A1- 1 196 669

## Description

L'invention a pour objet une arbalète de chasse sous-marine ainsi qu'un dispositif d'armement pour ce type d'arbalète.

L'invention concerne le domaine technique des fusils de chasse sous-marine de type arbalète à mécanisme d'armement élastique, c'est-à-dire comportant des liens élastiques latéraux qui propulsent la flèche.

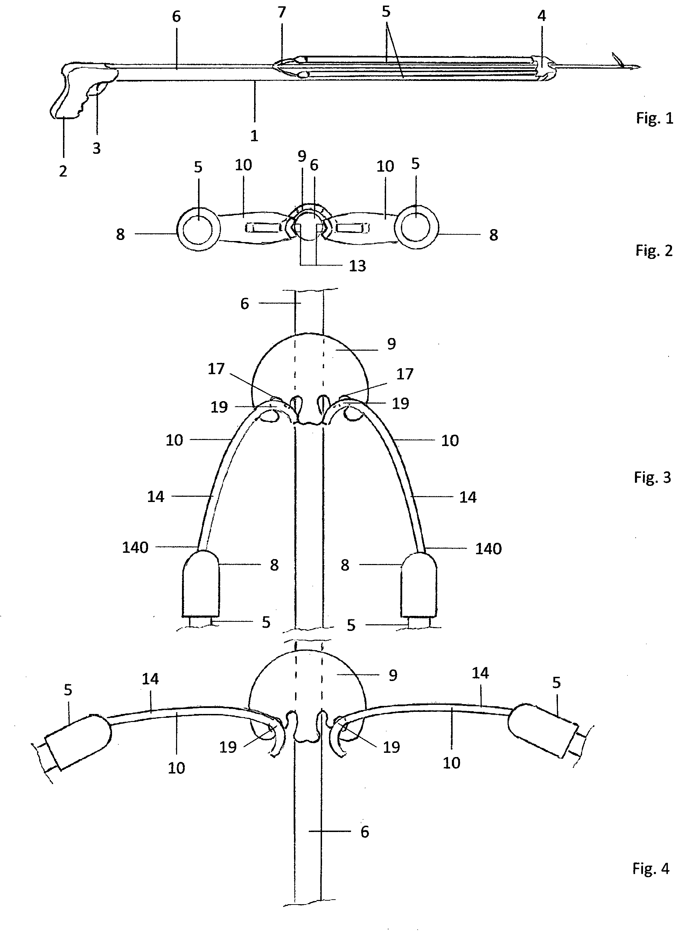

En se reportant à la figure 1, les arbalètes de chasse sous-marine à mécanisme d'armement élastique les plus couramment utilisées, comportent un corps allongé (1) dont l'extrémité arrière est pourvue d'une crosse (2) munie d'une gâchette (3), et dont l'extrémité avant est pourvue d'une tête (4) pour canaliser et propulser une flèche (6) à l'aide de liens élastiques (5) latéraux de propulsion dont les extrémités avant sont accrochées ou maintenus à la dite tête, et les extrémités arrière des liens élastiques (5) sont reliées à un dispositif d'armement (7) configuré pour se cranter sur la flèche (6) lors de l'armement. Généralement le dispositif d'armement est cranté sur un ergot ou une encoche situé sur l'arrière du corps de la flèche (6). Une telle arbalète est par example décrite dans le document brevet FR2758878 A. Ce type de dispositif d'armement a plusieurs inconvénients. Tout d'abord, l'armement de l'arbalète se fait uniquement sur les ergots ou les encoches réalisés sur le corps de la flèche: la tension des liens élastiques est donc constante et est imposée par la distance séparant les ergots ou les encoches, de la tête située à l'extrémité avant du corps de l'arbalète. Cette tension peut être trop importante pour un enfant ou un jeune adulte, ou trop faible selon le type de chasse pratiquée. Il arrive également que lors de l'armement, le dispositif d'armement s'accroche mal et parte malencontreusement dans les doigts du chasseur. De plus les ergots qui dépassent du corps de la flèche sont gênants, peuvent être dangereux et sont couteux à réaliser de même pour les encoches qui en plus fragilisent la flèche.

Face à cet état des choses, un objectif de l'invention est de supprimer tout ces inconvénients en proposant un dispositif d'armement qui permet au chasseur de régler à sa convenance la tension des liens élastiques. L'invention a encore pour objectif de proposer un dispositif d'armement dont la conception est simple, peu onéreuse et dont l'utilisation est aisée et très fiable.

La solution proposée par l'invention est une arbalète de chasse sous-marine à mécanisme d'armement élastique, ladite arbalète comportant un corps allongé dont l'extrémité arrière est pourvue d'une crosse munie d'une gâchette, et dont l'extrémité avant est pourvue d'une tête pour canaliser et propulser une flèche à l'aide de liens élastiques latéraux de propulsion dont les extrémités avant sont accrochées ou maintenues à la dite tête, et les extrémités arrière des liens élastiques sont reliées à un dispositif d'armement configuré pour se cranter sur la dite flèche lors de l'armement.

Cette arbalète est remarquable en ce que le dispositif d'armement intègre des éléments de serrage, lesquels éléments sont mobiles entre une position active où ils serrent le corps de la flèche et une position passive où ils libèrent le corps de ladite flèche, lesdits éléments de serrage étant en position active dès que les liens élastiques sont mis en tension pour armer l'arbalète.

Ainsi, lorsque le chasseur arme l'arbalète en bandant les liens élastiques, le dispositif d'armement se positionne par serrage sur n'importe quel endroit de la flèche, quel que soit le modèle de cette dernière. Non seulement la flèche peut ne plus comporter d'ergots ni d'encoches, mais le chasseur peut régler à sa guise la tension des liens élastiques. En outre, lors de l'armement, le chasseur, du fait que le dispositif d'armement soit canalisé sur la flèche, il n'y a plus de risque de déraillement. Tout cela permet au chasseur de garder une vue sur le poisson, tout en armant très facilement son arbalète à la puissance de tir désirée.

Le document brevet FR2778529 (Miceli Joseph) décrit une arbalète de chasse sous-marine dans laquelle les extrémités arrières des liens élastiques (14) sont reliés à un tendeur de réarmement (8) qui permet de tendre les liens élastiques (14) jusqu'au bout de l'arrière de la flèche, les liens élastiques sont alors tendus (en position armée). De plus, dans ce document brevet, la détente (5) formant gâchette n'est pas un dispositif d'armement permettant de maintenir les liens élastiques tendus (en position armée) mais une gâchette qui est comparable à la gâchette d'une crosse classique.

D'autres caractéristiques remarquables de l'arbalète objet de l'invention sont listées ci-dessous, chacune de ces caractéristiques pouvant être considérées seule ou en combinaison, indépendamment des caractéristiques remarquables définies ci-dessus :
- chaque élément de serrage comporte :
   - un moyen d'articulation d'axe vertical permettant de passer de la position active à la position passive
   - une partie de contact avec le corps de la flèche, cette dite partie de contact étant à proximité du moyen d'articulation
   - une partie formant un bras de levier dont l'extrémité est éloignée du moyen d'articulation et reliée à une extrémité arrière d'un des liens élastiques
- le dispositif d'armement comporte une partie formant appui configurée pour que les parties de contact avec le corps de la flèche des éléments de serrage restent toujours au niveau de l'axe médian de ladite flèche même si le dispositif d'armement s'incline par rapport audit plan médian de la flèche lors de l'armement de l'arbalète.
- les éléments de serrage sont articulés symétriquement en rotation sur une pièce de guidage, cette dernière comporte donc deux moyens d'articulation d'axe vertical coopérant avec des moyens d'articulation agencés sur lesdits éléments de serrage.
- la pièce de guidage comporte des parties situées de part et d'autre d'une empreinte, l'ensemble étant configurée pour se canaliser sur le corps de la flèche et pour positionner le plan médian horizontal des éléments de serrage dans le plan médian horizontal de la flèche.
- la partie en contact avec le corps de la flèche de chaque élément de serrage a une forme en V configurée pour avoir deux points de contact avec ladite flèche, lesquels points de contact sont positionnés symétriquement audit plan médian de la flèche.
- dans une version différente, la partie en contact avec le corps de la flèche de chaque élément de serrage a une forme configurée pour avoir un point de contact avec ladite flèche, lequel point de contact est positionné en dessous du plan médian horizontal de la flèche.
- chaque élément de serrage intègre un axe vertical de rotation de part le mode de fabrication.

D'autres avantages et caractéristiques de l'invention apparaîtront mieux à la lecture de la description d'un mode de réalisation préféré qui va suivre, en référence aux dessins annexés, réalisés à titre indicatif et non limitatifs et sur lesquels :
- la figure 1 précitée schématise une arbalète de chasse sous-marine à mécanisme d'armement élastique,
- la figure 2 est une vue de face du dispositif d'armement en position active,
- la figure 3 est une vue de dessus du dispositif d'armement en position active,
- la figure 4 est une vue de dessus du dispositif d'armement en position passive,
- la figure 5 est une vue de face de la pièce de guidage,
- la figure 6 est une vue de dessus de la pièce de guidage,
- la figure 7 est une vue de coté en coupe partielle du dispositif d'armement dans une position incliné par rapport au plan médian horizontal (A) de la flèche,
- la figure 8 est le développé d'un élément de serrage,
- la figure 9 est une coupe de l'élément de serrage de la figure 8
- la figure 10 est le développé d'un élément de serrage dans un autre mode de réalisation,
- la figure 11 est une vue de face du dispositif d'armement correspondant au mode de réalisation de la figure 10,

La figure 1 représente une arbalète de chasse sous-marine dans son ensemble. Elle comporte un corps allongé (1) dont l'extrémité arrière est pourvue d'une crosse (2) munie d'une gâchette (3), et dont l'extrémité avant est pourvue d'une tête (4) pour canaliser et propulser une flèche (6) à l'aide de liens élastiques de propulsion (5) accrochés ou maintenus à la dite tête. Ces liens élastiques (5) sont reliés à un dispositif d'armement (7) configuré pour se fixer sur la flèche (6) lors de l'armement.

Les figures 2, 3, 4 concernent le dispositif d'armement (7). Dans ce mode de réalisation le dispositif d'armement (7) est réalisé dans de la tôle inox de préférence et elle est mise en forme par découpe, pliage et emboutissage. Le dispositif d'armement (7) est composé d'une pièce de guidage (9) de deux éléments de serrage (10), de moyens d'attache (8) reliant les extrémités des éléments de serrage (10) aux liens élastiques (5).

Sur la figure 3 on voit le dispositif d'armement (7) en position active c'est-à-dire que les éléments de serrage (10) serrent le corps de la flèche (6) par l'effort engendré par la tension des liens élastiques (5). On peut comparer le fonctionnement du dispositif d'armement (7) à celui d'une pince. Les éléments de serrage (10) sont articulés sur une pièce de guidage (9) par des moyens d'articulation (17) d'axe vertical, chaque élément de serrage (10) comporte une partie de contact avec le corps de la flèche, cette dite partie de contact étant très proche du moyen d'articulation (17). On peut donc comparer ces dites parties de contact avec les parties supérieures d'une pince qui servent à serrer. Chaque élément de serrage (10) comporte ensuite une partie (14) formant un bras de levier permettant d'engendrer un effort de serrage conséquent. Ces dits bras de levier (14) peuvent aussi être comparés aux bras d'une pince.

Sur la figure 4 on voit le dispositif d'armement (7) en position passive c'est-à-dire qu'il n'y a plus de tension appliquée sur les éléments de serrage (10) ainsi il n'y a plus de serrage du corps de la flèche.

Sur la figure 2 le dispositif d'armement (7) est en position active et on peut voir les parties de contact avec le corps de la flèche (6) des éléments de serrage (10). En effet ces dites parties de contact sont configurées en forme de V afin que chaque élément de serrage comporte seulement deux points de contact (13) avec le corps de la flèche (6). On comprend que la configuration en forme de V de chaque partie de contact des éléments de serrage (10) permet au dispositif d'armement (7) de fonctionner avec n'importe quel diamètre de flèche (6).

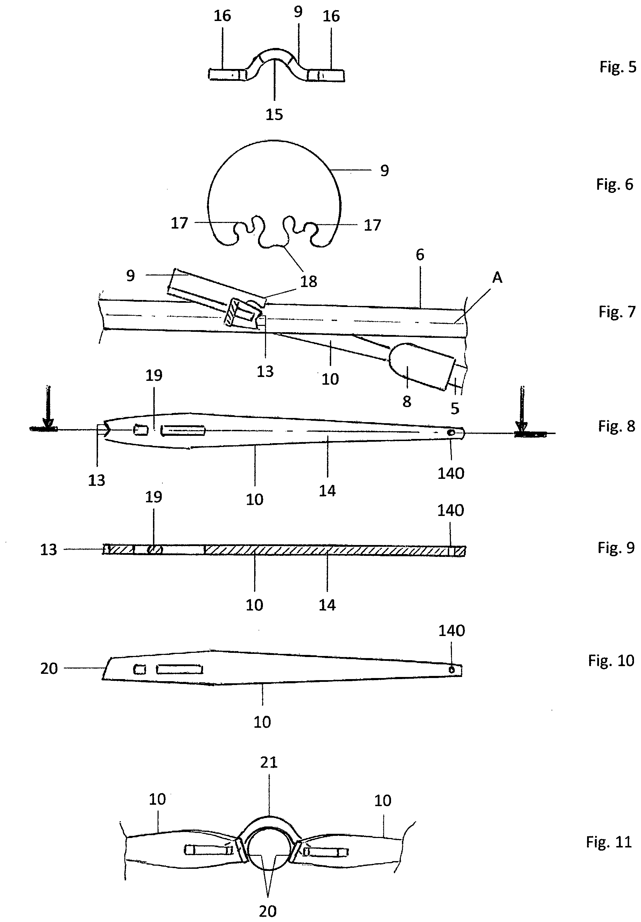

Sur la figure 5 on voit la pièce de guidage (9) en vue de face. Cette dite pièce de guidage (9) est configurée pour avoir en partie centrale une empreinte destinée à canaliser la dite pièce de guidage (9) sur la flèche (6). Cette empreinte (15) peut être en forme de demi-cylindre ou tout autre forme permettant de canaliser la dite pièce de guidage sur la flèche (6). La pièce de guidage (9) est prolongée de part et d'autre de l'empreinte (15) de parties horizontales (16) servant de support aux éléments de serrage (10) et permettant donc de positionner le plan médian horizontal de ces dits éléments de serrage dans le plan médian horizontal (A) de ladite flèche. La forme de la pièce de guidage (9) est réalisée par découpe et emboutissage d'une tôle d'acier inox par exemple.

La figure 6 montre la pièce de guidage (9) en vue de dessus. On voit les moyens d'articulation (17) d'axe vertical qui sont réalisés par des trous dans ladite pièce de guidage. Ces trous sont ouverts pour que l'on puisse insérer les moyens d'articulation (19) qui sont des axes réalisés dans les éléments de serrage (10). Après avoir assemblé chaque élément de serrage (10) avec la pièce de guidage (9), les trous ouverts sont resserrés lors du montage en usine pour que les trois pièces soient solidaires, mais les éléments de serrage (10) doivent rester mobiles en rotation sur la pièce de guidage (9).
Sur les figures 6 et 7 on voit la partie (18) de la pièce de guidage (9) qui sert à positionner les parties de contact des éléments de serrage (10) toujours au niveau de la flèche (6). Lorsque le chasseur arme l'arbalète il arrive très souvent que le dispositif d'armement (7) s'incline par rapport au plan médian horizontal (A) de la flèche (6). Sur la figure 7 un des éléments de serrage (10) est dessiné en coupe afin de voir les points de contact (13) et on comprend que la partie (18) de la pièce de guidage (9) permet de positionner ces dits points de contact (13) toujours centrés par rapport au plan médian horizontal (A) de la flèche (6). En effet si cette partie est mal configurée le dispositif d'armement (7) pourrait dérailler ou au contraire passer sous la flèche (6) et s'endommager ou endommager l'arbalète.

Les figures 8 et 9 montrent le développé d'un élément de serrage (10). On peut voir les points de contact (13), le moyen d'articulation (19) d'axe vertical et la partie bras de levier (14). De par le mode de fabrication qui est l'emboutissage on comprend que le moyen d'articulation (19) est un axe vertical réalisé dans la tôle d'acier de l'élément de serrage (10) et que ce dit axe a des arêtes verticales arrondies pour en limité l'usure. On voit aussi que la partie bras de levier (14) s'affine vers l'extrémité (140) qui est reliée à l'extrémité arrière d'un des liens élastiques (5) par un moyen connu de l'homme du métier. Ce bras de levier (14) affiné donne de la souplesse au dispositif d'armement (7) ce qui apporte du confort lorsque le chasseur veut désarmer son arbalète.

La figure 10 est un développé de l'élément de serrage (10) dans un autre mode de réalisation. On voit que la partie de contact avec la flèche (6) de l'élément de serrage (10) est configurée de façon à avoir un seul point de contact (20) avec cette dernière. En effet sur la figure 11 on voit que chaque élément de serrage (10) a un seul point de contact (20) avec la flèche (6) en dessous du plan médian horizontal (A) de la flèche (6). Ce mode de réalisation permet un serrage de la flèche (6) avec trois points, le troisième point de contact (21) se trouve sur la pièce de guidage (9) ce qui optimise le serrage de la flèche (6).

Ces modes de réalisation optimisent le coût du dispositif d'armement (7) mais tout autre type de réalisation et de fabrication peut être envisagé. Par exemple si les éléments de serrage (10) sont reliés avec un seul axe de rotation central. Aussi on peut envisager que les éléments de serrage (10) forment une seule pièce comportant en son centre une partie plus fine. Cette dite partie plus fine donne de la souplesse tel un ressort, ce qui permet d'installer le dispositif d'armement sur la flèche (6), mais aussi cette dite partie plus fine joue le rôle d'articulation permettant au dispositif d'armement de passer de la position active lorsqu'il serre la flèche (6) à la position passive lorsqu'il libère le corps de ladite flèche.

## Revendications

1. Arbalète de chasse sous-marine à mécanisme d'armement élastique, ladite arbalète comportant un corps allongé (1) dont l'extrémité arrière est pourvue d'une crosse (2) munie d'une gâchette (3), et dont l'extrémité avant est pourvue d'une tête (4) pour canaliser et propulser une flèche (6) à l'aide de liens élastiques (5) latéraux de propulsion dont les extrémités avant sont accrochées ou maintenues à la dite tête, et les extrémités arrières des dits liens élastiques étant reliées à un dispositif d'armement (7) configuré pour se cranter sur la dite flèche lors de l'armement, **caractérisée en ce que** le dispositif d'armement (7) intègre des éléments de serrage (10), lesquels éléments sont mobiles entre une position active où ils serrent le corps de la flèche (6) et une position passive où ils libèrent le corps de ladite flèche, lesdits éléments de serrage étant en position active dès que les liens élastiques (5) sont mis en tension pour armer l'arbalète.

2. Arbalète selon la revendication 1 **caractérisée en ce que** chaque élément de serrage (10) comporte :
- un moyen d'articulation (19) d'axe vertical permettant de passer de la position active à la position passive
- une partie de contact avec le corps de la flèche (6), cette dite partie de contact étant à proximité du moyen d'articulation (19)
- une partie formant un bras de levier (14) dont l'extrémité (140) est éloignée du moyen d'articulation (19) et reliée à une extrémité arrière d'un des liens élastiques (5)

3. Arbalète selon la revendication 2 **caractérisée en ce que** le dispositif d'armement (7) comporte une partie (18) formant appui configurée pour que les parties de contact avec le corps de la flèche (6) des éléments de serrage (10) restent toujours au niveau de l'axe médian horizontal (A) de ladite flèche même si ledit dispositif d'armement s'incline par rapport audit plan médian de la flèche (6) lors de l'armement de l'arbalète.

4. Arbalète selon l'une des revendications précédentes **caractérisée en ce que** les éléments de serrage (10) sont articulés symétriquement en rotation sur une pièce de guidage (9), cette dernière comporte donc deux moyens d'articulation (17) d'axe vertical coopérant avec des moyens d'articulation (19) agencés sur lesdits éléments de serrage.

5. Arbalète selon la revendication 4 **caractérisée en ce que** la pièce de guidage (9) comporte des parties (16) situées de part et d'autre d'une empreinte (15), l'ensemble étant configuré pour se canaliser sur le corps de la flèche (6) et pour positionner le plan médian horizontal des éléments de serrage (10) dans le plan médian horizontal (A) de ladite flèche.

6. Arbalète selon les revendications 2 à 5 **caractérisée en ce que** la partie en contact avec le corps de la flèche (6) de chaque élément de serrage (10) a une forme en V configurée pour avoir deux points de contact (13) avec ladite flèche, lesquels points de contact (13) sont positionnés symétriquement au plan médian horizontal (A) de ladite flèche.

7. Arbalète selon l'une les revendications 2 à 5 **caractérisée en ce que** la partie de contact avec le corps de la flèche (6) de chaque élément de serrage (10) a une forme configurée pour avoir un point de contact (20) avec ladite flèche, lequel point de contact est positionné en dessous du plan médian horizontal (A) de ladite flèche.

8. Arbalète selon les revendications 2 ou 4 **caractérisée en ce que** le moyen d'articulation (19) est intégré dans chaque élément de serrage (10) de part le mode de fabrication.

9. Arbalète selon l'une des revendications précédentes **caractérisée en ce que** les éléments de serrage (10) sont reliés entre eux par une articulation centrale.

10. Arbalète selon l'une des revendications précédentes **caractérisée en ce que** les éléments de serrage (10) forment une seule pièce comportant au moins une partie centrale plus mince faisant ressort permettant auxdits éléments de serrage de passer de la position active à la position passive.

## Patentansprüche

1. Armbrust für die Unterwasserjagd mit einem elastischen Spannmechanismus, wobei die Armbrust einen länglichen Körper (1) umfasst, dessen hinteres Ende mit einem Kolben (2) versehen ist, der mit einem Drücker (3) versehen ist, und dessen vorderes Ende mit einem Kopf (4) versehen ist, um einen Pfeil (6) mit Hilfe seitlicher elastischer Antriebsbänder (5) zu kanalisieren und anzutreiben, deren vordere Enden an dem Kopf aufgehängt oder gehalten werden, und wobei die hinteren Enden der elastischen Bänder mit einer Spannvorrichtung (7) verbunden sind, die konfiguriert ist, um auf dem Pfeil beim Spannen einzurasten, **dadurch gekennzeichnet, dass** die Spannvorrichtung (7) Elemente zum Spannen (10) enthält, die zwischen einer aktiven Position, in der sie den Körper des Pfeils (6) spannen, und einer passiven Position, in der sie den Körper des Pfeils freigegeben, beweglich sind, wobei die Spannelemente in aktiver Position sind, sobald die elastischen Bänder (5) gespannt werden, um die Armbrust zu spannen.

2. Armbrust nach Anspruch 1, **dadurch gekennzeichnet, dass** jedes Spannelement (10) Folgendes umfasst
- ein Anlenkmittel (19) mit vertikaler Achse, das es erlaubt, von der aktiven Position auf die passive Position überzugehen
- einen Teil zum Kontakt mit dem Körper des Pfeils (6), wobei dieser Teil zum Kontakt in der Nähe des Anlenkmittels (19) ist
- einen Teil, der einen Hebelarm (14) bildet, dessen Ende (140) von dem Anlenkmittel (19) entfernt und mit einem hinteren Ende eines der elastischen Bänder (5) verbunden ist.

3. Armbrust nach Anspruch 2, **dadurch gekennzeichnet, dass** die Spannvorrichtung (7) einen Teil (18) umfasst, der eine Auflage bildet, die konfiguriert ist, damit die Teile mit dem Körper des Pfeils (6) der Spannelemente (10) immer auf dem Niveau der mittleren horizontalen Achse (A) des Pfeils bleiben, sogar wenn sich die Spannvorrichtung in Bezug auf die mittlere Ebene des Pfeils (6) bei dem Spannen der Armbrust neigt.

4. Armbrust nach einem der vorhergehenden Ansprüche, **dadurch gekennzeichnet, dass** die Spannelemente (10) symmetrisch in Drehung auf einem Führungsteil (9) angelenkt sind, wobei dieses Letztere daher zwei Anlenkmittel (17) mit vertikaler Achse aufweist, die mit den Anlenkmitteln (19), die auf den Spannelementen eingerichtet sind, zusammenwirken.

5. Armbrust nach Anspruch 4, **dadurch gekennzeichnet, dass** das Führungsteil (9) Teile (16) umfasst, die zu beiden Seiten eines Abdrucks (15) liegen, wobei die Einheit konfiguriert ist, um sich auf dem Körper des Pfeils (6) zu kanalisieren, und um die mittlere horizontale Ebene der Spannelemente (10) in der horizontalen Ebene (A) des Pfeils zu positionieren.

6. Armbrust nach den Ansprüchen 2 bis 5, **dadurch gekennzeichnet, dass** der Teil in Kontakt mit dem Körper des Pfeils (6) jedes Spannelements (10) eine V-Form hat, die konfiguriert ist, um zwei Kontaktstellen (13) mit dem Pfeil zu haben, wobei die Kontaktstellen (13) symmetrisch zu der horizontalen mittleren Ebene (A) des Pfeils positioniert sind.

7. Armbrust nach einem der Ansprüche 2 bis 5, **dadurch gekennzeichnet, dass** der Teil zum Kontakt mit dem Körper (6) des Pfeils jedes Spannelements (10) eine Form hat, die konfiguriert ist, um eine Kontaktstelle (20) mit dem Pfeil zu haben, wobei die Kontaktstelle unter der horizontalen mittleren Ebene (A) des Pfeils positioniert ist.

8. Armbrust nach den Ansprüchen 2 oder 4, **dadurch gekennzeichnet, dass** das Anlenkmittel (19) in jedes Spannelement (10) aufgrund der Fertigungsart integriert ist.

9. Armbrust nach einem der vorhergehenden Ansprüche, **dadurch gekennzeichnet, dass** die Spannelemente (10) miteinander durch eine zentrale Anlenkung verbunden sind.

10. Armbrust nach einem der vorhergehenden Ansprüche, **dadurch gekennzeichnet, dass** die Spannelemente (10) ein einziges Teil bilden, das mindestens einen zentralen Teil umfasst, der dünner ist, der federt, der es den Spannelementen erlaubt, von der aktiven Position zu der passiven Position überzugehen.

## Claims

1. An underwater hunting crossbow with an elastic arming mechanism, said crossbow comprising an elongated body (1), the rear end whereof is provided with a stock (2) fitted with a trigger (3) and the front end whereof is provided with a head (4) for channelling and propelling a bolt (6) with the aid of propulsion lateral elastic ties (5), the front ends whereof are hooked onto or held to said head, and the rear ends of said elastic ties being connected to an arming device (7) configured to catch on said bolt during arming, **characterised in that** the arming device (7) incorporates clamping elements (10), which elements are mobile between an active position in which they clamp the body of the bolt (6) and a passive position in which they release the body of said bolt, said clamping elements being in the active position as soon as the elastic ties (5) are tensioned to arm the crossbow.

2. The crossbow according to claim 1, **characterised in that** each clamping element (10) comprises:
- a vertical axis articulation means (19) for changing from the active position to the passive position,
- a part in contact with the body of the bolt (6), said contact part being in the vicinity of the articulation means (19),
- a part forming a lever arm (14), the end (140) whereof is remote from the articulation means (19) and connected to a rear end of one of the elastic ties (5).

3. The crossbow according to claim 2, **characterised in that** the arming device (7) comprises a part (18) forming a support configured such that the parts of the clamping elements (10) in contact with the body of the bolt (6) always remain at the level of the horizontal median axis (A) of said bolt even if said arming device is inclined with respect to said median plane of the bolt (6) when the crossbow is being armed.

4. The crossbow according to any one of the preceding claims, **characterised in that** the clamping elements (10) are articulated symmetrically in rotation on a guide piece (9), the latter thus comprising two vertical axis articulation means (17) cooperating with articulation means (19) arranged on said clamping elements.

5. The crossbow according to claim 4, **characterised in that** the guide piece (9) comprises parts (16) situated on either side of an imprint (15), the whole being configured to channel the body of the bolt (6) and to position the horizontal median plane of the clamping elements (10) in the horizontal median plane (A) of said bolt.

6. The crossbow according to claims 2 to 5, **characterised in that** the part of each clamping element (10) in contact with the body of the bolt (6) has a V shape configured so as to have two points of contact (13) with said bolt, which points of contact (13) are positioned symmetrically with respect to the horizontal median plane (A) of said bolt.

7. The crossbow according to any one of claims 2 to 5, **characterised in that** the part of each clamping element (10) in contact with the body of the bolt (6) has a shape configured so as to have a point of contact (20) with said bolt, which point of contact is positioned below the horizontal median plane (A) of said bolt.

8. The crossbow according to claims 2 or 4, **characterised in that** the articulation means (19) is incorporated into each clamping element (10) by means of the method of manufacture.

9. The crossbow according to any one of the preceding claims, **characterised in that** the clamping elements (10) are connected to one another by a central articulation.

10. The crossbow according to any one of the preceding claims, **characterised in that** the clamping elements (10) form a single piece comprising at least one thinner central part forming a spring permitting said clamping elements to go from the active position to the passive position.
